# EUROPEAN PATENT APPLICATION

(11) **EP 3 428 561 A1**
(43) Date of publication of application: **16.01.2019**
(21) Application number: 17192012.7
(22) Date of filing: 20.09.2017
(51) Int. Cl.: F26B 21/06, B41F 23/04, F26B 13/00

(54) **PRINTED MEDIA DRYING DEVICE HAVING FUNCTIONS OF RECOVERING AND RECYCLING WASTE HEAT BY MEASURING ORGANIC SOLVENT, AND CONTROL METHOD THEREOF**

(30) Priority: 12.07.2017 KR 20170088208
(71) Applicant: Boosung Engineering Co., Ltd, Incheon 21315 (KR)
(72) Inventor: KIM, Kyoun Chun, Gyeonggi-do (KR); MUN, Yong Suk, Incheon (KR)
(74) Representative: Cabinet Chaillot

(57) **Abstract**

Disclosed are a printed media drying device having functions of recovering and recycling waste heat generated therefrom by measuring organic solvent so as to save energy, and a control method thereof. The printed media drying device includes a chamber unit (100) configured to heat and circulate air; a printing unit (200) connected to the chamber unit (100) to carry out printing and dry a printed media by heated air to be circulated; a suction unit (300) configured to forcibly introduce air into the chamber unit (100); a discharge unit (400) configured to forcibly discharge at least part of the air passing through the printing unit (200); a recirculating unit (500) connected between the chamber unit (100) and the suction unit (300) to introduce at least part of the air passing through the printing unit (200) into the suction unit (300), so that the air is mixed with external air and then is recirculated therein; and an organic solvent control unit (600) configured to measure concentration of organic solve contained in the air introduced into the chamber unit (100) and measure concentration of organic solvent contained in the air passing through the printing unit (200), thereby adjusting an inlet amount, an outlet amount and a recirculation amount of the air to be circulated on the basis of the respective measured values to control the concentration of the organic solvent contained in the air.

## Description

### BACKGROUND OF THE INVENTION

### Field of the Invention

The present invention relates to a printed media drying device having functions of recovering and recycling waste heat generated therefrom by measuring organic solvent so as to save energy, and a control method thereof.

### Background of the Related Art

In general, in case of special printing methods, such as gravure printing, flexography printing and so on, a printing device can continuously carry out the printing an object which is continuously transferred. If the printing of the object is completed, a printed surface is generally dried by a drying device.

A hot air driven capable of drying a printed media by forcibly circulating heated air is widely used for the printing device.

For example, an eco-friendly drying device having a hot air generator is disclosed in Korean Unexamined Patent Publication No. 10-2009-0037286 which includes a drying chamber through which an object to be dried is input; a regenerative burner connected to the drying chamber; a mixing chamber connected to a combustion chamber of the regenerative burner which is supplied by hot air and connected to the drying chamber in a closed circuit; and a hot air circulating blower connected to the drying chamber and the mixing chamber to feed the hot air from the drying chamber to an inside of the mixing chamber, mix the hot air of the drying chamber and the hot air of the regenerative burner in the mixing chamber, and supply it to the drying chamber.

The drying device of the related art has some problems.

The hot air drying device has a problem in that since the printing medium is dried through a cycle of supplying and discharging the hot air, the air is continuously supplied according to the discharge of the air, and the hot air is discharged without being recycled after drying, so that energy is consumed.

Also, volatile organic solvent is produced in the process of drying the printed surface by the hot air in the drying device of the related art. Since there is explosion hazard of the volatile organic solvent in an enclosed area, separate equipment, such as a burner, should be provided to eliminate the organic solvent. Concentration of the organic solvent is continuously varied, but the related art cannot counteract the variations in concentration of the organic solvent. If the concentration of the organic solvent is low, the energy is excessively wasted by unnecessary operation of the burner. If it exceeds the capacity of the burner, there is a problem in that there is explosion hazard.

### SUMMARY OF THE INVENTION

Therefore, the present invention has been made in view of the above problems, and an object of the present invention is to provide a printed media drying device having functions of recovering and recycling waste heat generated therefrom by measuring organic solvent, in which hot air to be discharged after drying is mixed with air to be introduced and then is supplied to a drying chamber, so that the hot air is recycled to efficiently save energy for operation of a drying device, and a control method thereof.

Also, another object of the present invention is to prevent a waste of energy and a risk of explosion due to variations in concentration of organic solvent by measuring the concentration of the organic solvent produced in a process of drying a printed surface by hot air at the respective supply and discharge sides and controlling an inlet/outlet rate of air based on the measured values to counteract the variations in concentration of the organic solvent.

In order to achieve the above objects, there is provided a printed media drying device having functions of recovering and recycling waste heat generated therefrom by measuring organic solvent so as to save energy, including: a chamber unit configured to heat and circulate air; a printing unit connected to the chamber unit to carry out printing and dry a printed media by heated air to be circulated; a suction unit configured to forcibly introduce air into the chamber unit; a discharge unit configured to forcibly discharge at least part of the air passing through the printing unit; a recirculating unit connected between the chamber unit and the suction unit to introduce at least part of the air passing through the printing unit into the suction unit, so that the air is mixed with external air and then is recirculated therein; and an organic solvent control unit configured to measure concentration of organic solve contained in the air introduced into the chamber unit and measure concentration of organic solvent contained in the air passing through the printing unit, thereby adjusting an inlet amount, an outlet amount and a recirculation amount of the air to be circulated on the basis of the respective measured values to control the concentration of the organic solvent contained in the air.

With the above configuration, the recirculating unit connects the air inlet side of the drying device and the hot air outlet side to mix the air heated in the drying chamber and mix it with external air, so that the mixed air is recirculated, thereby increasing usage efficiency of heat energy and reducing the energy.

Also, the organic solvent control unit measures the concentration of the organic solvent contained in the air at the inlet and outlet sides of the drying device to control an inlet rate and an outlet rate of the air and the amount of the recirculated art based on the measured values. Therefore, it is possible to automatically control the flow rate of the air while counteracting the variations in concentration of the organic solvent, and prevent the explosion and energy waste.

### BRIEF DESCRIPTION OF THE DRAWINGS

FIG. 1 is a schematic view illustrating a printed media drying device having functions of recovering and recycling waste heat generated therefrom by measuring organic solvent according to the first embodiment of the present invention.
FIG. 2 is a flowchart illustrating a method of controlling the printed media drying device having the functions of recovering and recycling the waste heat generated therefrom by measuring the organic solvent according to the first embodiment of the present invention.

### DETAILED DESCRIPTION OF THE PREFERRED EMBODIMENT

A printed media drying device having functions of recovering and recycling waste heat generated therefrom by measuring organic solvent according to a preferred embodiment of the present invention and a control method thereof will now be described in detail with reference to the accompanying drawings.

In the following description, elements widely known and used in the art will be not described in detail for clarity.

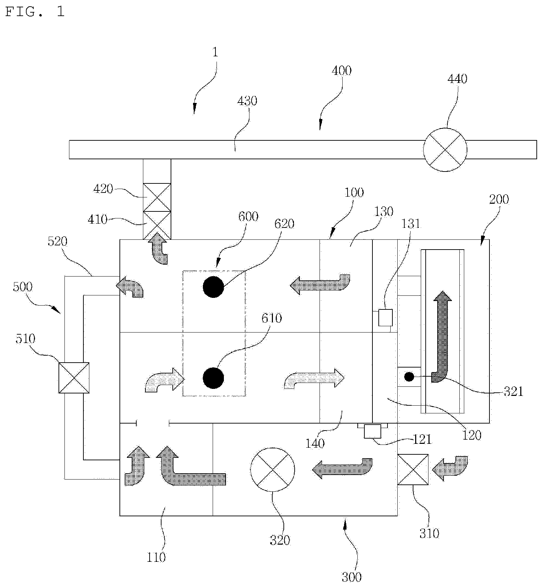

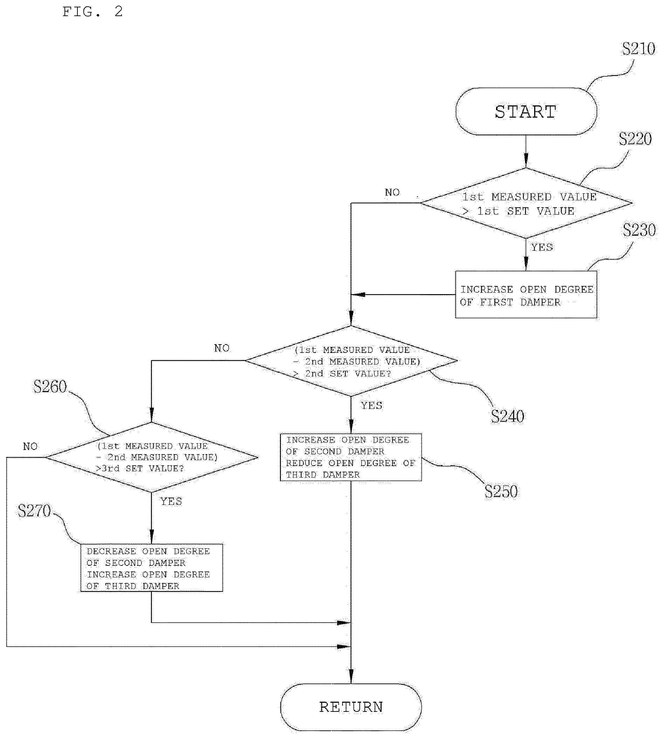

FIGS. 1 and 2 are views illustrating a printed media drying device having functions of recovering and recycling waste heat generated therefrom by measuring organic solvent according to the first embodiment of the present invention, and a control method thereof.

A printed media drying device 1 includes a chamber unit 100, a printing unit 200, a printing unit 200, a suction unit 300, a discharge unit 400, a recirculating unit 500, and an organic solvent control unit 600.

Now, the respective components of the printed media drying device having functions of recovering and recycling waste heat generated therefrom by measuring organic solvent according to the first embodiment of the present invention will be described in detail with reference to FIG. 1. FIG. 1 is a schematic view of the printed media drying device.

The chamber unit 100 is configured to provide a space in which air is heated and circulated.

The chamber unit 100 has a semi-hermetic space provided with a mixing port 110 to mix air fed from the suction unit 300 and air fed from the recirculating unit 500, and is made of a pipe line through which the air flows in the mixing port 110, the printing unit 200, the discharge unit 400 and the recirculating unit 500.

The chamber unit 100 may be provided with various kinds of sensors to monitor an internal state. The sensor may include a temperature sensor, a static pressure sensor, and a sensor to measure a level of a volatile organic solvent, for example.

Also, the chamber unit 100 has a condenser 120 which is installed at a position ahead of an air inlet portion of the printing unit 200 and heats the air to be supplied by a heat radiation function of gaseous refrigerant of high temperature and high pressure to be supplied thereto to supply it to the printing unit 200; a primary evaporator 130 which is installed to a portion, through which the air of the printing unit 200 passes, and dries pigment contained in the air passing the printing unit 200 by a heat exchange function (heat absorption) of saturated gaseous refrigerant of low temperature and low pressure to be supplied thereto; and a secondary evaporator 140 which is connected to the primary evaporator 130 and is supplied with superheated vapor refrigerant, to preheat the air to be introduced by a heat radiation function of the superheated gaseous refrigerant.

The condenser 120, the primary evaporator 130, and the second evaporator 140 consist of an inlet header, an outlet header, a plurality of tubes for connecting the inlet and outlet headers in a communication manner to form a desired path, and a plurality of heat transfer plates arranged between the tubes, respectively.

The condenser 120 has a compressor 121 to compress the gaseous refrigerant of low pressure supplied from the secondary evaporator 140 to a high-pressure gas state to supply it to the condenser 120.

The primary evaporator 130 has an expansion valve 131 which is supplied by a liquefied refrigerant from the condenser 120 and causes a pressure drop of the refrigerant to a evaporation level by a throttling function which is a low-temperature and low-pressure saturated gaseous state thereby to supply the saturated gaseous refrigerant to the primary evaporator 130.

The compressor 121 is connected between the secondary evaporator 140 and the condenser 120.

The expansion valve 131 is connected between the compressor 121 and the primary evaporator 130, and may employ various types of expansion valve, such as an electronic expansion valve, a thermostatic expansion valve, an automatic expansion valve, and the like.

The printing unit 200 is configured to carry out the printing, and is connected to the chamber unit 100 to provide a space in which a printed surface is dried by hot air to be circulated.

The printing unit 200 has a conduit to receive the air from the chamber unit 100 and a conduit to discharge the received air, both conduits being respectively connected to the chamber unit 100. The air is introduced to and discharged from the printing unit by the chamber unit 100, and the printing medium is printed and dried while being traveling in the printing unit 200 in a direction of an arrow.

The suction unit 300 is configured to forcibly introduce the air into the chamber unit 100.

The suction unit 300 is formed of an air conduit connected to the chamber unit 100, and has a first damper 310 and a suction fan 320. An open/close degree of the suction unit 300 is controlled by the first damper 310, and the chamber unit 100 is supplied with external air by the suction fan 320. Alternatively, the speed of the suction fan 320 may be fixed to a predetermined value depending upon printing conditions.

According to another example, the speed of the suction fan 320 can be controlled according to a pollution level in the chamber unit 100. In this instance, an inlet side of the printing unit 200 is provided with an air volume monitor 321 to measure an inflow rate of the air in real time according to the speed control of the suction fan 320, and the speed of the suction fan 320 is controlled on the basis of the value measured by the air volume monitor 321. If the inflow rate of the air is increased according to the speed control of the suction fan 320, concentration of the organic solvent is lowered.

The discharge unit 400 is configured to forcibly discharge at least part of the air passing through the printing unit 200 to the exterior.

The discharge unit 400 is connected to an air outlet of the chamber unit 100 by a first conduit 430, and has a second damper 410, a flowmeter 420, and an exhaust fan 440. According to one example, while the speed of the exhaust fan 440 is constantly maintained, it is kept the balance between a quantity of the air introduced to the discharge portion 400 and a quantity of the air discharged from the first conduit 430 by adjusting the second damper 410 only according to the pollution level in the chamber unit 100, thereby making the chamber unit 100 as a completely enclosed space.

The second damper 410 and the flowmeter 420 control the balance between the air to be introduced and the air to be discharged. Preferably, the exhaust fan 440 is provided with a solvent recovery device at a downstream side thereof, thereby recovering the organic solvent contained in the air discharged from the chamber unit 100.

The recirculating unit 500 is connected between the chamber unit 100 and the suction unit 300 to introduce at least part of the air passing through the printing unit 200 into the suction unit 300, so that the air is mixed with the external air and then is recirculated therein.

The recirculating unit 500 is formed in a conduit form to connect an outlet side of the printing unit 200, through which the air is discharged, and the mixing port 110 by a second conduit 520 in the chamber unit 100, and has a third damper 510. The recirculating unit 500 recirculates a part of the heated and polluted air used in the printing unit 200 into the chamber unit 100, and the recirculated air is mixed with the external air forcibly fed by the suction unit 300 and is introduced into the mixing port 110 of the chamber unit 100.

The flow of the air in the printing drying device 1 according to the embodiment will now be described in detail. The flow of the air in the chamber unit 100 is indicated by thick bent arrows. Specifically, the external cold air introduced from the exterior to the chamber unit 100 through the suction unit 300 is mixed with the air having residual heat introduced from the mixing port 110 to the recirculating unit 500, and then the mixed air is introduced into the chamber unit 100.

While the mixed air introduced into the chamber unit 100 passes through the heat transfer plates of the condenser 120 in the chamber unit 100, the air is heated by the heat radiation function by which the high-temperature and high-pressure gaseous refrigerant is heat-exchanged with the air.

The air heated by the condenser 120 dries the printing media while passing through the printing unit 200, and then is introduced into the primary evaporator 130. The waste heat of the heated air introduced into the primary evaporator 130 is recovered to some degree by the primary evaporator 130 which is converted into refrigerant of a superheated gaseous state and then is supplied to the secondary evaporator 140. The air can be preheated before passing through the condenser 120, by the heat exchange between the superheated gaseous refrigerant supplied to the secondary evaporator 140 and the mixed air introduced into the chamber unit 100.

In this instance, a part of the air having residual heat passing through the primary evaporator 130 is recirculated to the chamber unit 100 through the recirculating unit 500, so that the residual heat is reused, and the remaining air is discharged outwardly from the discharge unit 400.

The organic solvent control unit 600 is configured to measure the concentration of the organic solve contained in the air introduced into the chamber unit 100 and measure the concentration of the organic solvent contained in the air passing through the printing unit 200, thereby adjusting the inlet amount, the outlet amount and the recirculation amount of the air to be circulated on the basis of the respective measured values to control the concentration of the organic solvent contained in the air.

The organic solvent control unit 600 has a first sensor 610 to measure the concentration of the organic solve contained in the air introduced into the chamber unit 100, and a second sensor 620 to measure the concentration of the organic solvent contained in the air passing through the printing unit 200. The first sensor 610 and the second sensor 620 are configured to measure a lower limit of explosion.

The pollution level of the air, which is mixed with the recirculated air and the external air, introduced into the chamber unit 100 through the mixing port 110 is measured by the first sensor 610, and the pollution level of the air passing through the printing unit 200 is measured by the second sensor 620. Since the air passing through the printing unit 200 is in the heated state, the air contains high concentration of organic solvent.

In other words, the concentration of the organic solvent contained in the mixed air is measured by the first sensor 610 and the second sensor 620, and the first and second sensors 610 and 620 measure temperature to be increased by burning the air, thereby monitoring the pollution level of the air.

Also, the organic solvent control unit 600 has a processor having a memory saved with a first set value, a second set value and a third set value on the concentration of the organic solvent which are appropriate values for preferable operation of the printing drying device 1.

The processor stores the measured values on the concentration of the organic solvent measured by the first and second sensors 610 and 620 in the memory, and provides parameters related to the flow of the air in the chamber unit 100 which include open/close degree of the first damper 310, the second damper 410 and the third damper 510, and revolutions of the suction fan 320 and the exhaust fan 440. More specifically, the process controls the flow rate of the air according to the concentration of the organic solvent contained in the air in the chamber unit 100 to automatically adjust the concentration of the organic solvent within the limit to the explosion hazard.

FIG. 2 is a flowchart illustrating a method of controlling the printed media drying device having the functions of recovering and recycling the waste heat generated therefrom by measuring the organic solvent according to the first embodiment of the present invention.

For example, the method of controlling the printed media drying device 1 constructed as described above can be implemented by program commands which can be read by a computer. In this instance, the program commands can use a computer cooperating with the organic solvent control unit 600 of the printed media drying device 1, and the cooperation method can be implemented by hardware.

The method includes a step S210 of turning the control process of the organic solvent control unit 600 on.

At step S210, if the printed media drying device 1 is operated, the control process of the organic solvent control unit 600 is turned on which makes ready for automatically controlling the flow rate of the circulated air according to the measured concentration of the organic solvent.

After step S210, if the control processor starts, the method includes a step S220 of comparing whether the first value measured by the first sensor 610 is higher than the first set value previously stored in the memory or not, and proceeding to step S240 if the first measured value is smaller than or equal to the first set value.

In step S220, it determines whether the pollution level of the air which is mixed with the external air and the recirculated air is higher than the first set value previously stored in the memory or not.

If the first measured value is smaller than or equal to the first set value (NO at step S220), it proceeds to step S240.

After step S220, if the first measured value is higher than the first set value, the method includes a step S230 of calculating a new open degree of the suction unit 300 to increase the open degree of the suction unit 300.

At step S230, if the first measured value is higher than the first set value (YES at step S220), i.e., if the pollution level of the air is high, the open degree of the first damper 310 is adjusted to increase the flow rate of the air introduced from the exterior and thus lower the pollution level of the mixed air, and it proceeds to step S240.

After steps S220 and S230, the method includes a step S240 of comparing whether a difference between the first measured value and a second value measured by the second sensor 620 is higher than the second set value previously stored in the memory or not.

At step S240, it determines whether the difference between the first measured value and the second measured value is higher than the second set value previously stored in the memory or not.

After step S240, if the difference between the first measured value and the second measured value is higher than the second set value, the method includes a step S250 of reducing the open level of the recirculating unit 500 by calculating a new open/close degree of the recirculating unit 500, and simultaneously increasing the open degree of the discharge unit 400 by calculating a new open/close degree of the discharge unit 400.

At step S250, if the difference between the first measured value and the second measured value is higher than the second set value (YES at step S240), i.e., in the case where the pollution level of the air is increased to be higher than a predetermined level while passing through the printing unit 200, a new open/close degree of the third damper 510 of the recirculating unit 500 is calculated, and the open degree of the third damper 510 is reduced since the a lot of solvent is dried when the air passes through the printing unit 200. Then, the new open/close degree of the second damper 410 of the discharge unit 400 is calculated, and the open level of the second damper 410 is increased to lower the pollution level in the chamber unit 100. After that, it proceeds to the first step.

After step S240, if the difference between the first measured value and the second measured value is lower than or equal to the second set value, the method includes a step S260 of comparing whether the difference between the first measured value and the second measured value is higher than the third set value or not.

If the difference between the first measured value and the second measured value is lower than or equal to the second set value (NO at step S240), the step S260 compares whether the difference between the first measured value and the second measured value is lower than the third set value previously stored in the memory or not.

If the difference between the first measured value and the second measured value is now lower than the third set value (NO at step S260), it proceeds to the first step.

After step S260, if the difference between the first measured value and the second measured value is higher than the third set value, the method includes a step S270 of increasing the open level of the recirculating unit 500 by calculating a new open/close degree of the recirculating unit 500, and simultaneously reducing the open degree of the discharge unit 400 by calculating a new open/close degree of the discharge unit 400.

At step S270, if the difference between the first measured value and the second measured value is lower than the third set value (YES at step S260), since the amount of the organic solvent dried in the printing unit 200 is small, the flow rate of the recirculated air is increased. To this end, a new open/close degree of the third damper 510 of the recirculating unit 500 is calculated, and the open degree of the third damper 510 is increased.

Then, the new open/close degree of the second damper 410 of the discharge unit 400 is calculated to improve energy efficiency. After that, it proceeds to the first step.

As described above, the printed media drying device according to the present invention can increase usage efficiency of the heat energy and reduce the energy. Also, it is possible to automatically control the flow rate of the air according to the variations in concentration of the organic solvent, thereby preventing explosion and energy waste.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A printed media drying device having functions of recovering and recycling waste heat generated therefrom by measuring organic solvent so as to save energy, comprising:
a chamber unit (100) configured to heat and circulate air;
a printing unit (200) connected to the chamber unit (100) to carry out printing and dry a printed media by heated air to be circulated;
a suction unit (300) configured to forcibly introduce air into the chamber unit (100);
a discharge unit (400) configured to forcibly discharge at least part of the air passing through the printing unit (200);
a recirculating unit (500) connected between the chamber unit (100) and the suction unit (300) to introduce at least part of the air passing through the printing unit (200) into the suction unit (300), so that the air is mixed with external air and then is recirculated therein; and
an organic solvent control unit (600) configured to measure concentration of organic solve contained in the air introduced into the chamber unit (100) and measure concentration of organic solvent contained in the air passing through the printing unit (200), thereby adjusting an inlet amount, an outlet amount and a recirculation amount of the air to be circulated on the basis of the respective measured values to control the concentration of the organic solvent contained in the air.

2. The printed media drying device according to claim 1, wherein the organic solvent control unit (600) includes a first sensor (610) to measure the concentration of the organic solve contained in the air introduced into the chamber unit (100), and a second sensor (620) to measure the concentration of the organic solvent contained in the air passing through the printing unit (200), and
the first sensor (610) and the second sensor (620) have a sensor capable of measuring a level of volatile organic solvent.

3. The printed media drying device according to claim 1, wherein the suction unit (300), the discharge unit (400), and the recirculating unit (500) include a first damper (310), a second damper (410), and a third damper (510), respectively, and
the organic solvent control unit (600) controls an open degree of at least one or two of the first, second and third dampers (310, 410 and 510).

4. The printed media drying device according to claim 1, wherein the chamber unit (100) includes a condenser (120) which is installed at a position ahead of an air inlet portion of the printing unit (200) and heats the air to be introduced by a heat radiation function of gaseous refrigerant of high temperature and high pressure to be supplied thereto to supply the heated air to the printing unit (200);
a primary evaporator (130) which is installed to a portion, through which the air of the printing unit (200) passes, and dries pigment contained in the air passing the printing unit (200) by a heat exchange function of saturated gaseous refrigerant of low temperature and low pressure to be supplied thereto; and
a secondary evaporator (140) which is connected to the primary evaporator (130) and is supplied with superheated vapor refrigerant, to preheat the air to be introduced by a heat radiation function of the superheated gaseous refrigerant.

5. The printed media drying device according to claim 4, wherein the condenser (120) includes a compressor (121) to compress the gaseous refrigerant of low pressure supplied from the secondary evaporator (140) to a high-pressure gas state to supply it to the condenser (120).

6. The printed media drying device according to claim 4, wherein the primary evaporator (130) has an expansion valve (131) which is supplied by a liquefied refrigerant from the condenser (120) and causes a pressure drop of the refrigerant to a evaporation level by a throttling function which is a low-temperature and low-pressure saturated gaseous state thereby to supply the saturated gaseous refrigerant to the primary evaporator (130).

7. A method of controlling the printed media drying device set forth in claims 1 to 4, comprising:
a step S210 of turning the control process of the organic solvent control unit (600) on;
after step S210, if a control processor starts, a step S220 of comparing whether a first value measured by a first sensor (610) is higher than a first set value previously stored in a memory or not, and proceeding to step S240 if the first measured value is smaller than or equal to the first set value;
after step S220, if the first measured value is higher than the first set value, a step S230 of calculating a new open degree of the suction unit (300) to increase an open degree of the suction unit (300);
after steps S220 and S230, a step S240 of comparing whether a difference between the first measured value and a second value measured by a second sensor (620) is higher than a second set value previously stored in the memory or not;
after step S240, if the difference between the first measured value and the second measured value is higher than the second set value, s step S250 of reducing the open level of the recirculating unit (500) by calculating a new open/close degree of the recirculating unit (500), and simultaneously increasing an open degree of the discharge unit (400) by calculating a new open/close degree of the discharge unit (400);
after step S240, if the difference between the first measured value and the second measured value is lower than or equal to the second set value, a step S260 of comparing whether the difference between the first measured value and the second measured value is higher than the third set value or not; and
after step S260, if the difference between the first measured value and the second measured value is higher than the third set value, a step S270 of increasing the open level of the recirculating unit (500) by calculating a new open/close degree of the recirculating unit (500), and simultaneously reducing the open degree of the discharge unit (400) by calculating a new open/close degree of the discharge unit (400).
